# EUROPÄISCHE PATENTSCHRIFT

(11) **EP 2 565 487 B1**
(45) Veröffentlichungstag und Bekanntmachung des Hinweises auf die Patenterteilung: **15.07.2020**
(21) Anmeldenummer: 12181223.4
(22) Anmeldetag: 21.08.2012
(51) Int. Cl.: F16D 65/72

(54) **Bremsvorrichtung**
Braking device
Dispositif de freinage

(30) Priorität: 02.09.2011 DE 102011082094
(43) Veröffentlichungstag der Anmeldung: 06.03.2013
(73) Patentinhaber: Deere & Company, Moline, IL 61265 (US)
(72) Erfinder: Back, Peter, 68789 St. Leon-Rot (DE); Nordhoff, Hendrik, 68163 Mannheim (DE); Lange, Harm-Hendrik, 31167 Bockenem (DE); Knapp, Bernhard, 55596 Waldboeckelheim (DE)
(74) Vertreter: Dehnhardt, Florian Christopher

(56) Entgegenhaltungen:
- GB-A- 2 140 086
- US-A- 3 589 478
- US-A- 3 643 763
- US-B1- 6 286 635

## Beschreibung

Die Erfindung betrifft eine Bremsvorrichtung für ein Fahrzeug, umfassend eine Radbremseinrichtung mit einem Aktuator, einer Reibpaarung und Rückstellmitteln, ferner Bedienmittel zur Ansteuerung der Radbremseinrichtung, wobei die Bremsvorrichtung mittels einer Steuergröße in einem Normalbetriebsmodus betreibbar ist und bei Unterschreiten eines Schwellenwertes der Steuergröße in einem Sicherungsmodus betreibbar ist, wobei im Normalbetriebsmodus die Steuergröße den Aktuator derart beaufschlagt, dass der Aktuator zwischen der Reibpaarung ein erstes Lüftspiel einstellt und wobei im Sicherungsmodus die Rückstellmittel zwischen der Reibpaarung ein gegenüber dem ersten Lüftspiel verringertes zweites Lüftspiel einstellen.

Die Einstellung eines Sicherungsmodus mit einem verringerten Lüftspiel wird bei der Auslegung derartiger Bremsvorrichtungen angestrebt, da die Bedienmittel zur Ansteuerung der Radbremseinrichtung, die beispielsweise als Bremsventil ausgestaltet sein können, im Sicherungsmodus eine verringerte Volumenkapazität bereitstellen. Somit kann ein besseres Ansprechverhalten der Bremse im Sicherungsmodus erreicht werden.

Die EP 2 146 109 A1 zeigt eine Scheibenbremsvorrichtung mit einem Bremsventil und einem hydraulischen Retraktorsystem, um in einem Normalbetriebsmodus das Lüftspiel zu maximieren und in einem Sicherungsmodus ein manuelles Abbremsen wirksam zu ermöglichen. Das Retraktorsystem umfasst einen Bremskolben, eine Bremsfeder und einen Retraktorstößel. Der Retraktorstößel ist starr mit dem Bremskolben verbunden.

Dokument GB2140086 A offenbart eine Bremsvorrichtung gemäß dem Oberbegriff des Anspruchs 1.

Ausgehend hiervon besteht die Aufgabe der Erfindung darin, eine Bremsvorrichtung mit einer verbesserten Ansteuerung der Radbremseinrichtung in den Betriebsmodi bereitzustellen.

Die Aufgabe wird gelöst durch eine Bremsvorrichtung für ein Fahrzeug gemäß dem Anspruch 1.

Hierbei bedeutet Reibpaarung beispielsweise eine Anordnung aus einer radwellendrehenden Bremsscheibe und zumindest einem gehäusefesten Bremsbelag, der gegen die Bremsscheibe zur Erzeugung eines Reibkontaktes beaufschlagt wird. Alternativ kann eine Reibpaarung auch aus einer radwellendrehenden Reibscheibe mit Reibbelägen und zumindest einem gegen die Reibscheibe beaufschlagbaren gehäusefesten Anlaufelement bestehen. Das Anlaufelement kann als runde, zu der Radwelle konzentrisch angeordnete Anlaufscheibe gestaltet sein. Bevorzugt sind mehrere Rückstellmittel über den Umfang angeordnet, beispielsweise drei oder vier. Die Rückstellmittel können als Schraubendruckfeder ausgeführt sein. Die Bremsvorrichtung kann auch als Trommelbremse, Backenbremse oder Kegelbremse ausgeführt sein.

Bei einem Lüftspiel handelt es sich um einen zumindest minimalen axialen oder radialen Spalt, d.h. axial bzw. radial bezogen auf die Drehachse der Bremsvorrichtung, zwischen den Elementen, die die Reibpaarung bilden, d.h. zwischen der Bremsscheibe und dem zumindest einen Bremsbelag oder der Reibscheibe und dem zumindest einen Anlaufelement. Der Aktuator übt eine Stellwirkung auf die Reibpaarung zur Erzeugung eines Lüftspiels aus. Eine gegenläufige Wirkung, d.h. eine Rückstellwirkung, üben die Rückstellmittel auf die Reibpaarung auf.

Bei der erfindungsgemäßen Bremsvorrichtung ist von Vorteil, dass im Normalbetriebsmodus eine Ansteuerung der Radbremseinrichtung beziehungsweise eine Beaufschlagung der Reibpaarung in Richtung eines Reibkontaktes erfolgen kann, ohne dass hierbei die Stellwirkung beziehungsweise die Stellkraft des Aktuators überwunden werden muss, dass heißt ohne dass diese Stellkraft zusätzlich aufgebracht werden muss. Vielmehr wird erfindungsgemäß sichergestellt, dass die die Stellkraft auslösende Steuergröße übersteuert wird. Diese Stellkraft ist bei einem hydraulischen Aktuator das Produkt aus Druck und Kolbenflächen, wenn der Aktuator als Zylinder-Kolben-Einheit gestaltet ist, und kann bei Drücken von bis über 200 bar bei einem landwirtschaftlichen Nutzfahrzeug signifikant sein. Weiterhin besteht der Vorteil bei der erfindungsgemäßen Bremsvorrichtung darin, dass bei einer verringerten Volumenkapazität der Bedienmittel im Sicherungsmodus infolge des verringerten Lüftspiel dennoch eine sichere Bremsung bei einem schnellen Ansprechen erfolgen kann.

Bevorzugt umfasst das Ausgleichselement zur Übersteuerung der Steuergröße Federmittel. Von Vorteil ist hierbei, dass diese Ausgestaltung einfach aufgebaut ist und Normteile Verwendung finden können.

In einer ersten konkreten Ausgestaltung kann der Aktuator über die Federmittel mit der Reibpaarung zugnachgiebig und/oder drucknachgiebig verbunden sein. In einer zweiten konkreten Ausgestaltung kann der Aktuator über die Federmittel mit einem Gehäuse der Radbremseinrichtung zugnachgiebig und/oder drucknachgiebig verbunden sein. Bei dem Gehäuse kann es sich beispielsweise um ein Bremssattelgehäuse handeln. Von Vorteil ist bei beiden Ausgestaltungen der einfache Aufbau mittels Federn als Normteile.

In einer weiteren konkreten Ausgestaltung können die Federmittel einen hydraulischen Speicher umfassen. Von Vorteil ist bei dieser Ausgestaltung, dass sie geringe Anforderungen an den Platzbedarf im Bereich der Bremse stellt, da der Speicher außerhalb des Gehäuses der Radbremseinrichtung angeordnet werden kann.

Bevorzugt ist die Steuergröße ein von einer Ölpumpe erzeugter hydraulischer Öldruck. In vorteilhafterweise wird hierdurch unabhängig von einer Bedienung der Bremsvorrichtung ein Öldruck für den Normalbetriebsmodus bereitgestellt.

In weiterhin bevorzugter Ausgestaltung ist ein Druckspeicher vorgesehen, in dem der hydraulische Öldruck speicherbar ist. Hierdurch wird in vorteilhafterweise über einen gewissen Zeitraum eine von einer Öldruckquelle unabhängige Druckversorgung gewährleistet. Alternativ kann anstelle der Hydraulik auch eine Pneumatik vorgesehen sein.

In weiterhin bevorzugter Ausgestaltung umfassen die Bedienmittel ein hydraulisches Bremsventil. Insbesondere ist bevorzugt, dass zwischen der Ölpumpe und den Bedienmitteln ein Rückschlagventil angeordnet ist. Hierdurch ergibt sich als mögliche Anordnung, dass das Rückschlagventil zwischen der Ölpumpe und dem hydraulischen Bremsventil in einer Zuleitung angeordnet ist.

Bei einer ersten Ausführungsform der erfindungsgemäßen Bremsvorrichtung ist der Druckspeicher zwischen dem Rückschlagventil und dem Bremsventil angeordnet. Dies kann bedeuten, dass der Druckspeicher in einer hydraulischen Verbindungsleitung zwischen dem Rückschlagventil und dem Bremsventil in Reihe angeordnet ist.

Bevorzugt wird bei der ersten Ausführungsform die Steuergröße für den Aktuator zwischen dem Druckspeicher und dem hydraulischen Bremsventil abgegriffen. Bei der ersten Ausführungsform ist von Vorteil, dass nach einem Ausfall der Ölpumpe weiterhin hydraulischer Druck in der Hydraulikleitung zu dem Aktuator vorhanden ist.

Bei einer zweiten Ausführungsform der erfindungsgemäßen Bremsvorrichtung zweigt der Druckspeicher zwischen dem Rückschlagventil und dem hydraulischen Bremsventil ab. Weiterhin bevorzugt wird die Steuergröße für den Aktuator zwischen dem Rückschlagventil und der Ölpumpe abgegriffen. Bei der zweiten Ausführungsform ist von Vorteil, dass nach einem Ausfall der Ölpumpe der Aktuator über die Hydraulikleitung nicht mehr mit hydraulischen Druck versorgt wird, so dass nach Unterschreiten des Schwellenwerten der Steuergröße die erfindungsgemäße Bremsvorrichtung in den Sicherungsmodus fällt, während der Druckspeicher das Bremsventil wie im Normalbetriebsmodus noch für eine gewisse Anzahl von Bremsungen mit Öldruck versorgt, was als Überlagerung bezeichnet werden kann.

Bevorzugt handelt es sich bei dem Aktuator um eine hydraulische Zylinder-Kolben-Anordnung. Hierbei kann insbesondere vorgesehen sein, dass die Ansteuerung des Aktuators ausgehend von den Bedienmitteln mittels einer Hydraulikleitung erfolgt.

Bevorzugt ist für alle Ausführungsformen, dass die Hydraulikleitung einen Abzweig zu einem Hydraulikreservoir aufweist zur Entlastung des hydraulischen Drucks beim Wechsel vom Normalbetriebsmodus in den Sicherungsmodus. Hierdurch wird gewährleistet, dass bei einem Wegfall der Druckversorgung, beispielsweise durch die Ölpumpe, sich der hydraulische Druck in der Hydraulikleitung abbaut, so dass die Bremsvorrichtung in den Sicherungsmodus fällt. Weiterhin ist bevorzugt, dass in der Hydraulikleitung zumindest ein Drosselventil angeordnet ist, wobei insbesondere bevorzugt ist, dass zumindest ein Drosselventil vor dem Abzweig zu dem Hydraulikreservoir und eine Drosselventil nach dem Abzweig zu dem Hydraulikreservoir angeordnet ist. Hierdurch wird in vorteilhafterweise gewährleistet, dass ein Öldurchfluss in das Hydraulikreservoir auf einen definierten Wert begrenzt wird. Weiterhin kann man über die Abstimmung des Drosselventils den Druckabfall über der Zeit bei fehlender bzw. ausgefallener Druckversorgung einstellen. In weiterhin bevorzugter Ausgestaltung können zwei in Reihe geschaltete widerstandsäquivalente Drosselventile oder Blenden vorgesehen sein. Hierdurch kann ein Zusetzen des Drosselventils nach dem Abzweig vermieden werden.

Bevorzugt weist die Radbremseinheit einen zweiten Aktuator auf, insbesondere in Form einer Zylinder-Kolben-Einheit, mittels dem im Normalbetriebsmodus und im Sicherungsmodus nach Ansteuerung durch die Bedienmittel die Beaufschlagung der Reibpaarung in Richtung eines Reibkontaktes beziehungsweise Reibschlusses erfolgt. Bevorzugt wird der zweite Aktuator mittels der Steuergröße angesteuert.

Für alle Ausführungsformen ist weiterhin bevorzugt, dass das Bremsventil, das Rückschlagventil und der Abgriff der Steuergröße für den Aktuator baulich integriert gestaltet sind, vorzugsweise innerhalb eines Gehäuses. Bevorzugt ist auch der Abgriff zu dem Druckspeicher integriert. Hierdurch ist gewährleistet, dass das Risiko eine Leitungsknickung reduziert wird und es wird erreicht, dass für das Bremsventil und den ersten Aktuator und den zweiten Aktuator unterschiedliche Versorgungs- oder Signalzustände vorliegen können.

Bevorzugte Ausführungsbeispiele der erfindungsgemäßen Bremsvorrichtung werden anhand der Figuren beschrieben. Hierin zeigen
- Figur 1: eine erfindungsgemäße Bremsvorrichtung in einer ersten Ausführungsform mit einer ersten Variante eines ersten Aktuators,
- Figur 2a: eine Einzelheit der Radbremseinrichtung mit einer zweiten Variante eines ersten Aktuators,
- Figur 2b: eine Einzelheit der Radbremseinrichtung mit einer dritten Variante eines ersten Aktuators und
- Figur 3: eine erfindungsgemäße Bremsvorrichtung in einer zweiten Ausführungsform.

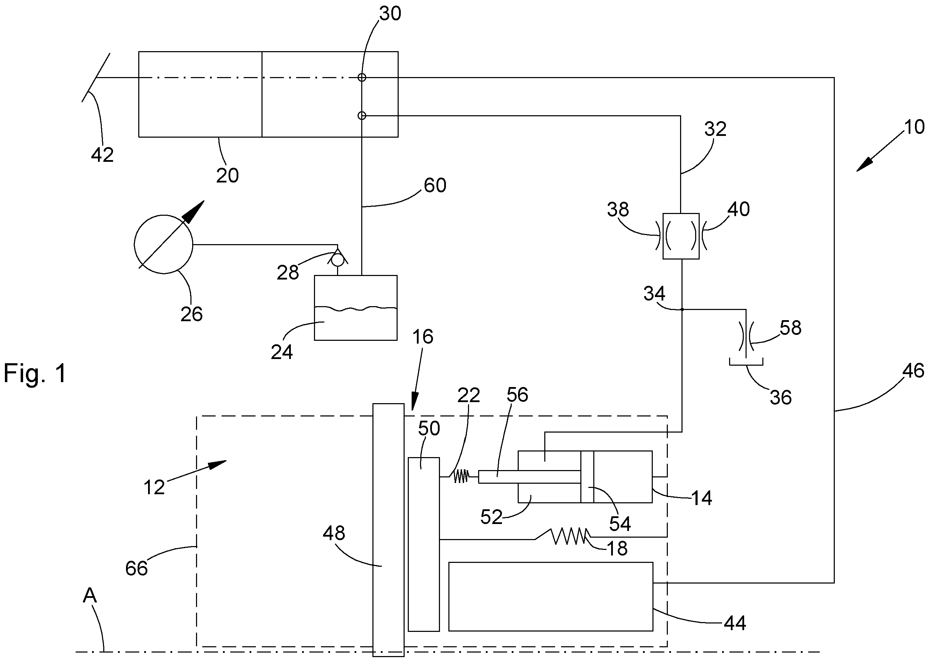

Figur 1 zeigt eine Bremsvorrichtung 10 mit einer Ölpumpe 26 und einem Druckspeicher 24, über die eine Steuergröße in Form eines hydraulischen Öldrucks erzeugt werden kann. Die Bremsvorrichtung 10 umfasst ferner Bedienmittel 20 mit einem durch eine Bedienperson bedienbaren Bremspedal 42 zum Einwirken auf ein Bremsventil 30 und eine Radbremseinrichtung 12. Die Bedienmittel 20 und die Radbremseinrichtung 12 sind über eine erste Hydraulikleitung 32 und eine zweite Hydraulikleitung 46 hydraulisch miteinander verbunden.

Die erste Hydraulikleitung 32 bildet einen Abzweig 34 zu einem Hydraulikölreservoir 36 aus. Stromaufwärts dieses Abzweigs 34 sind ein erstes Drosselventil 38 und ein zweites Drosselventil 40 parallel zueinander angeordnet. Ein drittes Drosselventil 58 ist stromabwärts des Abzweigs 34 in der Leitung zu dem Hydraulikölreservoir 36 angeordnet. Die Funktion dieser Anordnung wird weiter unten beschrieben.

Die Radbremseinrichtung 12 umfasst einen ersten Aktuator 14 in Form einer ersten Zylinder-Kolben-Einheit, einen zweiten Aktuator 44 in Form einer zweiten Zylinder-Kolben-Einheit und eine Reibpaarung 16, die eine Reibscheibe 48 mit nicht dargestellten Reibbelägen und eine Anlaufscheibe 50 umfasst. Die Reibscheibe 48 ist drehbar um eine Drehachse A angeordnet und die Anlaufscheibe 50 und die Aktuatoren 14, 44 sind gegenüber der Drehachse A drehfest angeordnet. Die Anlaufscheibe 50 ist bezogen auf die Drehachse A axial beweglich. Die Konfiguration der Reibpaarung 16 kann auch anders gewählt werden, beispielsweise mit einer Bremsscheibe und zumindest einem Bremsbelag.

Ferner sind Rückstellmittel 18 in Form einer Schraubendruckfeder vorgesehen, wobei prinzipiell auch andere Federtypen zweckmäßig sein können. Die Rückstellmittel 18 stützen sich zur einen Seite in nicht näher dargestellter Weise an einem Gehäuse 66 der Radbremseinrichtung 12 ab. Das Gehäuse 66 kann in typischer Ausgestaltung ein Ringgehäuse sein oder alternativ als Bremssattelgehäuse ausgeführt sein. Zur anderen Seite stützen sich die Rückstellmittel 18 an der Anlaufscheibe 50 ab. Die Rückstellmittel 18 sind zwischen dem Gehäuse 66 und der Anlaufscheibe 50 vorgespannt, so dass durch die Vorspannung die Anlaufscheibe 50 in Richtung der Reibscheibe 48 beaufschlagt. Hierdurch wird zumindest ein Anlegen der Anlaufscheibe 50 gegen die Reibscheibe 48 erreicht.

Weiterhin ist zwischen dem ersten Aktuator 14 und der Anlaufscheibe 50 ein Ausgleichselement 22 in Form einer Schraubenzugfeder angeordnet. Hierdurch sind der erste Aktuator 14 und die Anlaufscheibe 50 gegeneinander bewegbar beziehungsweise zugnachgiebig miteinander verbunden. Die Funktion der hierdurch möglichen Relativbewegung zwischen dem ersten Aktuator 2 und der Anlaufscheibe 20 wird weiter unten beschrieben.

Die Funktion der erfindungsgemäßen Bremsvorrichtung 10 ist im Normalbetriebsmodus folgendermaßen: Durch den Antrieb der Ölpumpe 26, beispielsweise durch eine nicht dargestellte Verbrennungskraftmaschine eines landwirtschaftlichen Nutzfahrzeugs, wird ein hydraulischer Druck in der Bremsvorrichtung 10 erzeugt, der in dem Druckspeicher 24 gespeichert wird. Bezüglich des Normalbetriebsmodus muss zwischen einem gebremsten Zustand und einem ungebremsten Zustand unterschieden werden.

Bei einer Betätigung der Bedienmittel 20 über das Bremspedal 42 durch eine Bedienperson wird der gebremste Zustand des Normalbetriebsmodus eingeleitet. Durch die Betätigung des Bremspedals 42 öffnet sich das Bremsventil 30 um einen entsprechenden Betrag, so dass ein bestimmtes Volumen des unter Druck stehenden Hydrauliköls durch die zweite Hydraulikleitung 46 zu dem zweiten Aktuator 44 gelangen kann. Hierrüber wird im Normalbetriebsmodus durch den zweiten Aktuator 44 die Anlaufplatte 50 in Richtung der Reibscheibe 48 beaufschlagt und ein Reibkontakt zwischen der Reibpaarung 16 hergestellt. Die Anlaufplatte 50 hat vor der Beaufschlagung ein Lüftspiel gegenüber der Reibplatte 48, welches überwunden werden muss, bevor die Anlaufscheibe 50 an der Reibplatte 48 zur Anlage kommt. Das Lüftspiel kann im ungebremsten Zustand des Normalbetriebsmodus zwischen 0,5 mm und 1,5 mm betragen; vorzugsweise beträgt es etwa 1 mm.

Das Lüftspiel stellt sich bei der in Figur 1 gezeigten ersten Ausführung des ersten Aktuators 14 folgendermaßen ein: Über die Hydraulikleitung 32 wird die Druckkammer 52 des ersten Aktuators 14 mit hydraulischem Druck versorgt, so dass sich der Kolben 54 und die an diesen gekoppelte Zugstange 56 mit der Schraubenzugfeder 22 und die Anlaufscheibe 50 von der Reibscheibe 48 wegbewegen. Durch diese Bewegung werden die Rückstellmittel 18 komprimiert. Hierbei sind die Federraten der Rückstellmittel 18 und des Ausgleichselements 22 derart aufeinander abgestimmt, dass die Federrate des Ausgleichselements 22 oder die Gesamtfederrate mehrerer - nicht dargestellter - Ausgleichselemente höher ist als die des Rückstellmittels 18, so dass bei der Einstellbewegung des Lüftspiels die Schraubendruckfeder 18 komprimiert wird, ohne dass das Ausgleichselement 22 gleichermaßen ausgelenkt wird.

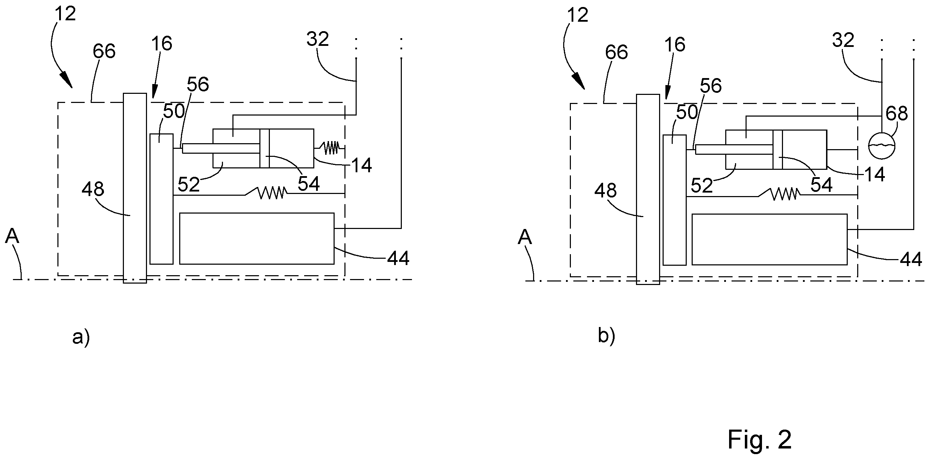

Die Figuren 2a und 2b zeigen alternative Ausführungen des ersten Aktuators 14. Bei der Alternative der Figur 2a ist ein Ausgleichselement 64 in Form einer Schraubenzugfeder zwischen dem ersten Aktuator 14 und dem Gehäuse 66 der Radbremseinheit 12 angeordnet. Der erste Aktuator 14 ist in nicht näher dargestellter Weise parallel zu der Drehachse A in dem Gehäuse 66 bewegbar. Bei der alternativen Ausführung der Figur 2b ist ein Ausgleichselement 68 in Form eines hydraulischen Federspeichers in der Hydraulikleitung 32 angeordnet. Auch bei diesen alternativen Ausführungen sind die Federraten der Ausgleichselemente 64 bzw. 68 so ausgelegt, dass sie höher sind als die Federrate der Rückstellmittel 18.

Bei den drei beschriebenen Ausführungen des ersten Aktuators dienen die Ausgleichselemente 22, 64 und 68 jeweils zur Übersteuerung einer Beaufschlagung der Bremse durch den zweiten Aktuator 44. Die Funktion der Ausgleichselemente 22, 64, 68 ist entscheidend für den Übergang des ungebremsten Zustandes in den gebremsten Zustand des Normalbetriebsmodus. Wie oben beschrieben, beaufschlagt der zweite Aktuator 44 bei Betätigung des Bremspedals 42 und anliegendem hydraulischen Öldruck die Anlaufscheibe 50 gegen die Reibscheibe 48 beziehungsweise in Richtung der Reibscheibe 48. Das jeweilige Ausgleichselement 22, 64, 68 ermöglicht hierbei eine Relativbewegung zwischen der Anlaufscheibe 50 und dem ersten Aktuator 14, der, wie oben beschrieben, aufgrund des hydraulischen Druck zur Einstellung des Lüftspiels die Anlaufscheibe 50 von der Reibscheibe 48 wegbeaufschlagt. Im gebremsten Zustand des Normalbetriebsmodus überwinden somit der zweite Aktuator 44 und die parallel wirkende Federkraft der Rückstellmittel 18 die Federkraft des jeweiligen Ausgleichselements 22, 64, 68, so dass dieses ausgelenkt wird und der erste Aktuator 14 in sich keine beziehungsweise annähernd keine Bewegung erfährt. Da in diesem Zustand die Steuergröße weiterhin den ersten Aktuator 14 beaufschlagt, wird die Steuergröße durch das jeweilige Ausgleichselement 22, 64, 68 übersteuert.

Der Übergang vom Normalbetriebsmodus in den Sicherungsmodus erfolgt, wenn kein oder kein ausreichender hydraulischer Öldruck mehr zur Verfügung steht. Dies kann beispielsweise der Fall sein, wenn die Förderung durch die Ölpumpe 26 aufgefallen ist, eine Leckage oder eine Knickung oder Stauchung einer Hydraulikleitung vorliegt. In einem solchen Fall baut sich der hydraulische Druck in der Hydraulikleitung 32 in dem Maße ab, in dem über den Abzweig 34 durch das Drosselventil 24 Öl in das Hydraulikölreservoir 36 fließt. Unterschreitet nun der hydraulische Druck in dem ersten Aktuator 14 eine bestimmtes Maß, so dass die Kraft der Beaufschlagung auf die Anlaufscheibe 50 die Rückstellkraft der Rückstellmittel 18 auf die Anlaufscheibe 50 unterschreitet, wird die Anlaufscheibe 50 durch die Rückstellmittel 18 gegen die Reibscheibe 48 beaufschlagt, so dass das Lüftspiel zumindest nahezu beseitigt ist. In diesem Zustand befindet sich die Bremsvorrichtung 10 im Sicherungsmodus, in dem in bekannter und nicht näher erläuterter Weise die Bedienperson mittels des Bremspedals 42 über das Bremsventil 30 einen hydraulischen Druck in der Hydraulikleitung 46 - bei verringerter Volumenkapazität des Bremsventils 30 - erzeugen kann, um über den zweiten Aktuator 44 die Anlaufscheibe 50 gegen die Reibscheibe 48 zu beaufschlagen und einen Reibschluss zu erzeugen. Somit muss bei Bedienung der Bremsvorrichtung 10 im Sicherungsmodus kein oder zumindest nur ein minimales Lüftspiel überwunden werden, bevor ein Reibschluss zwischen der Reibpaarung 16 bestehend aus Anlaufscheibe 50 und Reibscheibe 48 aufgebaut wird.

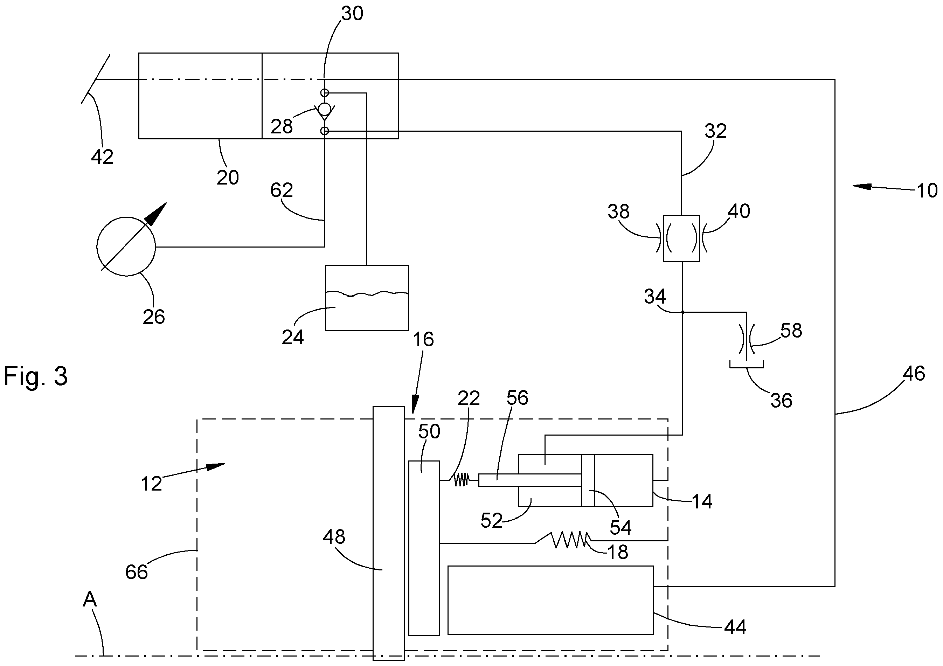

Der Unterschied zwischen dem Ausführungsbeispiel der Figur 1 und dem der Figur 3 der erfindungsgemäßen Bremsvorrichtung 10 wird nachfolgend beschrieben, wobei lediglich aus Gründen einer vereinfachten Darstellung bei beiden Ausführungsbeispielen die erste Variante des ersten Aktuators 14 mit dem Ausgleichselement 22 gezeigt ist. Bei beiden Ausführungsbeispielen der Bremsvorrichtung 10 kann eine der drei alternativen Ausführungen des ersten Aktuators 14 Verwendung finden.

Bei dem ersten Ausführungsbeispiel, gezeigt in Figur 1, versorgt die Ölpumpe 26 über das Rückschlagventil 28 den Druckspeicher 24 mit Öldruck. Der Druckspeicher 24 ist über die Hydraulikleitung 60 mit dem Bremsventil 30 verbunden. Von der Hydraulikleitung 60 zweigt als Steuerleitung bzw. Pilotleitung die Hydraulikleitung 32 zur Versorgung des ersten Aktuators 14 in Form der ersten Zylinder-Kolben-Einheit ab. Vorzugsweise ist der Abzweig der Hydraulikleitung 32 von der Hydraulikleitung 60 baulich in ein Gehäuse der Bedienmittel 20 integriert. Fällt bei diesem ersten Ausführungsbeispiel die Ölversorgung aus, beispielsweise wenn die Ölpumpe 26 nicht mehr angetrieben wird, fällt die Bremsvorrichtung 10 erst in den Sicherungsmodus, wenn der Öldruck in dem Druckspeicher 24 durch Entlastung der Hydraulikleitung 32 in das Hydraulikölreservoir 36 oder durch Bremsbetätigung so weit abgefallen ist, dass der hydraulische Druck in dem ersten Aktuator 14 ein bestimmtes Maß unterschreitet, so dass die Kraft der Beaufschlagung auf die Anlaufscheibe 50 die Rückstellkraft der Rückstellmittel 18 auf die Anlaufscheibe 50 unterschreitet, wie oben beschrieben.

Bei dem zweiten Ausführungsbeispiel, gezeigt in Figur 3, versorgt die Ölpumpe 26 ebenfalls über ein Rückschlagventil 28 den Druckspeicher 24 mit Öldruck, wobei allerdings von einer Hydraulikleitung 62 zwischen der Ölpumpe 26 und dem Rückschlagventil 28 die Hydraulikleitung 32 als Steuerleitung bzw. Pilotleitung abzweigt. Vorzugsweise ist hier der Abzweig der Hydraulikleitung 32 von der Hydraulikleitung 62 und das Rückschlagventil 28 baulich in ein Gehäuse der Bedienmittel 20 integriert. Fällt bei diesem zweiten Ausführungsbeispiel die Ölversorgung aus, beispielsweise wenn die Ölpumpe 26 nicht mehr angetrieben wird, fällt die Bremsvorrichtung 10 in den Sicherungsmodus, wenn der Öldruck in der Hydraulikleitung 32 durch Entlastung in das Hydraulikölreservoir 36 so weit abgefallen ist, dass der hydraulische Druck in dem ersten Aktuator 14 eine bestimmtes Maß unterschreitet, so dass die Kraft der Beaufschlagung auf die Anlaufscheibe 50 die Rückstellkraft der Rückstellmittel 18 auf die Anlaufscheibe 50 unterschreitet, wie oben beschrieben. Bei dem zweiten Ausführungsbeispiel muss somit nicht zuerst der Öldruck in dem Druckspeicher 24 aufgebraucht sein. Die Bremsvorrichtung 10 gemäß dem zweiten Ausführungsbeispiel fällt somit nach Wegfall der Druckversorgung schneller in den Sicherungsmodus als die Bremsvorrichtung 10 gemäß dem ersten Ausführungsbeispiel.

Nach einem Wechsel der Bremsvorrichtung 10 in den Sicherungsmodus ergibt sich für die Bedienperson, die eine Bremsvorrichtung 10 gemäß dem zweiten Ausführungsbeispiel bedient, ein anderes Pedalgefühl verglichen mit einer Bedienung einer Bremsvorrichtung 10 gemäß dem ersten Ausführungsbeispiel. Im Wesentlichen wird das andere Pedalgefühl durch einen größeren Pedalweg bestimmt, da das für das Füllen des radseitigen Bremskolbens erforderliche Ölvolumen in dem Bremsventil 30 begrenzt ist. Das Pedalgefühl des ersten Ausführungsbeispiels wird dadurch bestimmt, dass der Normalbetriebsmodus bis zu einem Druckabfall im Druckspeicher 24 aufrechterhalten wird. Bis dahin erfährt die Bedienperson demnach ein unverändertes Pedalgefühl und danach ist das Pedalgefühl durch den Sicherungsmodus bestimmt, in dem die Bedienperson mittels des Bremspedals 42 über das Bremsventils 30 den hydraulischen Öldruck und das Ölvolumen für den zweiten Aktuator 44 aufbringen muss.

Das Pedalgefühl des zweiten Ausführungsbeispiels wird dadurch bestimmt, dass infolge des Ausfalls der Druckversorgung die Bremsvorrichtung 10 in den Sicherungsmodus gefallen ist, also der erste Aktuator 14 kein Lüftspiel aufrechthält, der zweite Aktuator 44 allerdings für eine gewisse Anzahl von Bremsungen über eine Betätigung des Bremsventils 30 mittels des Bremspedals 42 mit Öldruck aus dem Druckspeicher 24 versorgt werden. Somit muss bei einer normalen Bremsung mittels des noch bestehenden Öldrucks aus dem Druckspeicher 24 nicht erst ein Lüftspiel überwunden werden, bevor die Reibpaarung 16 in Reibschluss gebracht wird.

### Bezugszeichenliste

- 10: Bremsvorrichtung
- 12: Radbremseinrichtung
- 14: Aktuator
- 16: Reibpaarung
- 18: Rückstellmittel
- 20: Bedienmittel
- 22: Ausgleichselement
- 24: Druckspeicher
- 26: Ölpumpe
- 28: Rückschlagventil
- 30: Bremsventil
- 32: Hydraulikleitung
- 34: Abzweig
- 36: Hydraulikölreservoir
- 38: Drosselventil
- 40: Drosselventil
- 42: Bremspedal
- 44: Aktuator
- 46: Hydraulikleitung
- 48: Reibscheibe
- 50: Anlaufscheibe
- 52: Druckkammer
- 54: Kolben
- 56: Zugstange
- 58: Drosselventil
- 60: Hydraulikleitung
- 62: Hydraulikleitung
- 64: Federmittel
- 66: Gehäuse
- 68: Federspeicher
- A: Drehachse

## Patentansprüche

1. Bremsvorrichtung (10) für ein Fahrzeug, umfassend
eine Radbremseinrichtung (12) mit einem Aktuator (14), einer Reibpaarung (16) und Rückstellmitteln (18), ferner mit Bedienmitteln (20) zur Ansteuerung der Radbremseinrichtung (12), wobei die Bremsvorrichtung (10) mittels einer Steuergröße in einem Normalbetriebsmodus betreibbar ist und bei Unterschreiten eines Schwellenwertes der Steuergröße in einem Sicherungsmodus betreibbar ist, wobei im Normalbetriebsmodus die Steuergröße den Aktuator (14) derart beaufschlagt, dass der Aktuator (14) zwischen der Reibpaarung (16) ein erstes Lüftspiel einstellt und wobei im Sicherungsmodus die Rückstellmittel (18) zwischen der Reibpaarung (16) ein gegenüber dem ersten Lüftspiel verringertes zweites Lüftspiel einstellen, wobei bei einer Ansteuerung der Radbremseinrichtung (12) die Steuergröße mittels eines Ausgleichselements (22, 64, 68) übersteuerbar ist, **dadurch gekennzeichnet, dass** bei Bedienung der Bremsvorrichtung (10) im Sicherungsmodus kein oder zumindest nur ein minimales Lüftspiel überwunden werden muss, bevor ein Reibschluss zwischen der Reibpaarung (16) aufgebaut wird.

2. Bremsvorrichtung (10) nach Anspruch 1, **dadurch gekennzeichnet, dass** das Ausgleichselement zur Übersteuerung der Steuergröße Federmittel (22, 64, 68) umfasst.

3. Bremsvorrichtung (10) nach Anspruch 2, **dadurch gekennzeichnet, dass** der Aktuator (14) über die Federmittel (22) mit der Reibpaarung (16) zugnachgiebig und/oder drucknachgiebig verbunden ist.

4. Bremsvorrichtung (10) nach Anspruch 2, **dadurch gekennzeichnet, dass** der Aktuator (14) über die Federmittel (64) mit einem Gehäuse (66) der Radbremseinrichtung (12) zugnachgiebig und/oder drucknachgiebig verbunden ist.

5. Bremsvorrichtung (10) nach Anspruch 2, **dadurch gekennzeichnet, dass** die Federmittel einen hydraulischen Speicher (68) umfassen.

6. Bremsvorrichtung (10) nach einem der Ansprüche 1 bis 5, **dadurch gekennzeichnet, dass** die Steuergröße ein von einer Ölpumpe (26) erzeugter hydraulischer Öldruck ist und dieser in einem Druckspeicher (24) speicherbar ist.

7. Bremsvorrichtung (10) nach einem der Ansprüche 1 bis 6, **dadurch gekennzeichnet, dass** die Bedienmittel (20) ein hydraulisches Bremsventil (30) umfassen.

8. Bremsvorrichtung (10) nach Anspruch 6 oder 7, **dadurch gekennzeichnet, dass** zwischen der Ölpumpe (26) und den Bedienmitteln (20) ein Rückschlagventil (28) angeordnet ist.

9. Bremsvorrichtung (10) nach Anspruch 8, **dadurch gekennzeichnet, dass** der Druckspeicher (24) zwischen dem Rückschlagventil (28) und dem Bremsventil (30) angeordnet ist.

10. Bremsvorrichtung (10) nach Anspruch 9, **dadurch gekennzeichnet, dass** die Steuergröße für den Aktuator (14) zwischen dem Druckspeicher (24) und dem hydraulischen Bremsventil (30) abgegriffen wird.

11. Bremsvorrichtung (10) nach Anspruch 9, **dadurch gekennzeichnet, dass** die Steuergröße für den Aktuator (14) zwischen dem Rückschlagventil (28) und der Ölpumpe (26) abgegriffen wird.

12. Bremsvorrichtung (10) nach einem der Ansprüche 1 bis 11, **dadurch gekennzeichnet, dass** es sich bei dem Aktuator (14) um eine hydraulische Zylinder-Kolben-Anordnung handelt und dessen Ansteuerung ausgehend von den Bedienmitteln (20) mittels einer Hydraulikleitung (32) erfolgt.

13. Bremsvorrichtung (10) nach Anspruch 12, **dadurch gekennzeichnet, dass** die Hydraulikleitung (32) einen Abzweig (34) zu einem Hydraulikölreservoir (36) aufweist zur Entlastung des hydraulischen Drucks beim Wechsel vom Normalbetriebsmodus in den Sicherungsmodus.

14. Bremsvorrichtung (10) nach Anspruch 12 oder 13, **dadurch gekennzeichnet, dass** in der Hydraulikleitung (32) zumindest ein Drosselventil (38) angeordnet ist.

15. Bremsvorrichtung (10) nach einem der Ansprüche 12 bis 14, **dadurch gekennzeichnet, dass** in der Hydraulikleitung (32) zumindest ein Blende angeordnet ist.

## Claims

1. Brake apparatus (10) for a vehicle, comprising a wheel brake device (12) with an actuator (14), a friction pairing (16) and resetting means (18), furthermore with operating means (20) for the actuation of the wheel brake device (12), it being possible for the brake apparatus (10) to be operated in a normal operating mode by means of a control variable, and it being possible for the said brake apparatus to be operated in a safety mode if a threshold value of the control variable is undershot, the control variable loading the actuator (14) in the normal operating mode in such a way that the actuator (14) sets a first air play between the friction pairing (16), and, in the safety mode, the resetting means (18) setting a second air play between the friction pairing, which second air play is reduced in comparison with the first air play, it being possible for the control variable to be overridden by means of a balancing element (22, 64, 68) in the case of an actuation of the wheel brake device (12), **characterized in that**, in the case of operation of the brake apparatus (10) in the safety mode, no air play or at least merely a minimum air play has to be overcome before a frictionally locking connection is built up between the friction pairing (16).

2. Brake apparatus (10) according to Claim 1, **characterized in that** the balancing element for overriding the control variable comprises spring means (22, 64, 68).

3. Brake apparatus (10) according to Claim 2, **characterized in that** the actuator (14) is connected to the friction pairing (16) via the spring means (22) in a manner which is resilient with respect to tensile and/or compressive loading.

4. Brake apparatus (10) according to Claim 2, **characterized in that** the actuator (14) is connected to a housing (66) of the wheel brake device (12) via the spring means (64) in a manner which is resilient with respect to tensile and/or compressive loading.

5. Brake apparatus (10) according to Claim 2, **characterized in that** the spring means comprise a hydraulic accumulator (68).

6. Brake apparatus (10) according to one of Claims 1 to 5, **characterized in that** the control variable is a hydraulic oil pressure which is generated by an oil pump (26), and the said oil pressure can be stored in a pressure accumulator (24).

7. Brake apparatus (10) according to one of Claims 1 to 6, **characterized in that** the operating means (20) comprise a hydraulic brake valve (30).

8. Brake apparatus (10) according to Claim 6 or 7, **characterized in that** a check valve (28) is arranged between the oil pump (26) and the operating means (20).

9. Brake apparatus (10) according to Claim 8, **characterized in that** the pressure accumulator (24) is arranged between the check valve (28) and the brake valve (30).

10. Brake apparatus (10) according to Claim 9, **characterized in that** the control variable for the actuator (14) is tapped off between the pressure accumulator (24) and the hydraulic brake valve (30).

11. Brake apparatus (10) according to Claim 9, **characterized in that** the control variable for the actuator (14) is tapped off between the check valve (28) and the oil pump (26).

12. Brake apparatus (10) according to one of Claims 1 to 11, **characterized in that** the actuator (14) is a hydraulic cylinder/piston arrangement, and the actuation thereof takes place by means of a hydraulic line (32) starting from the operating means (20).

13. Brake apparatus (10) according to Claim 12, **characterized in that** the hydraulic line (32) has a branch (34) to a hydraulic oil reservoir (36) for relieving the hydraulic pressure in the case of the change from the normal operating mode into the safety mode.

14. Brake apparatus (10) according to Claim 12 or 13, **characterized in that** at least one throttle valve (38) is arranged in the hydraulic line (32).

15. Brake apparatus (10) according to one of Claims 12 to 14, **characterized in that** at least one orifice is arranged in the hydraulic line (32).

## Revendications

1. Dispositif de freinage (10) pour un véhicule, comprenant :
un appareil de freinage de roue (12) comprenant un actionneur (14), un accouplement de frottement (16) et des moyens de rappel (18), et comprenant des moyens de commande (20) pour le contrôle de l'appareil de freinage de roue (12), le dispositif de freinage (10) pouvant être exploité au moyen d'une grandeur de commande dans un mode d'exploitation normal et pouvant être exploité dans un mode de sauvegarde en dessous d'une valeur seuil de la grandeur de commande, la grandeur de commande chargeant l'actionneur (14) dans le mode d'exploitation normal de telle sorte que l'actionneur (14) ajuste un premier jeu d'air entre l'accouplement de frottement (16) et, dans le mode de sauvegarde, les moyens de rappel (18) ajustant un deuxième jeu d'air réduit en comparaison du premier jeu d'air entre l'accouplement de frottement (16), la grandeur de commande pouvant être remplacée au moyen d'un élément de compensation (22, 64, 68) lors d'un contrôle de l'appareil de freinage de roue (12), **caractérisé en ce que** lors de la commande du dispositif de freinage (10) dans le mode de sauvegarde, aucun jeu d'air ou au moins uniquement un jeu d'air minimal doit être surmonté avant la formation d'une liaison par frottement entre l'accouplement de frottement (16).

2. Dispositif de freinage (10) selon la revendication 1, **caractérisé en ce que** l'élément de compensation comprend des moyens de ressort (22, 64, 68) pour le remplacement de la grandeur de commande.

3. Dispositif de freinage (10) selon la revendication 2, **caractérisé en ce que** l'actionneur (14) est relié de manière élastique en traction et/ou de manière élastique en pression par l'intermédiaire des moyens de ressort (22) avec l'accouplement de frottement (16).

4. Dispositif de freinage (10) selon la revendication 2, **caractérisé en ce que** l'actionneur (14) est relié de manière élastique en traction et/ou de manière élastique en pression par l'intermédiaire des moyens de ressort (64) avec un boîtier (66) de l'appareil de freinage de roue (12).

5. Dispositif de freinage (10) selon la revendication 2, **caractérisé en ce que** les moyens de ressort comprennent un accumulateur hydraulique (68).

6. Dispositif de freinage (10) selon l'une quelconque des revendications 1 à 5, **caractérisé en ce que** la grandeur de commande est une pression d'huile hydraulique générée par une pompe à huile (26) et celle-ci peut être stockée dans un accumulateur de pression (24).

7. Dispositif de freinage (10) selon l'une quelconque des revendications 1 à 6, **caractérisé en ce que** les moyens de commande (20) comprennent une soupape de freinage hydraulique (30).

8. Dispositif de freinage (10) selon la revendication 6 ou 7, **caractérisé en ce qu'**une soupape anti-retour (28) est agencée entre la pompe à huile (26) et les moyens de commande (20).

9. Dispositif de freinage (10) selon la revendication 8, **caractérisé en ce que** l'accumulateur de pression (24) est agencé entre la soupape anti-retour (28) et la soupape de freinage (30).

10. Dispositif de freinage (10) selon la revendication 9, **caractérisé en ce que** la grandeur de commande pour l'actionneur (14) est acquise entre l'accumulateur de pression (24) et la soupape de freinage hydraulique (30) .

11. Dispositif de freinage (10) selon la revendication 9, **caractérisé en ce que** la grandeur de commande pour l'actionneur (14) est acquise entre la soupape anti-retour (28) et la pompe à huile (26).

12. Dispositif de freinage (10) selon l'une quelconque des revendications 1 à 11, **caractérisé en ce que** l'actionneur (14) consiste en un agencement cylindre-piston hydraulique et son contrôle a lieu à partir des moyens de commande (20) au moyen d'une conduite hydraulique (32).

13. Dispositif de freinage (10) selon la revendication 12, **caractérisé en ce que** la conduite hydraulique (32) comprend une dérivation (34) vers un réservoir d'huile hydraulique (36) pour le déchargement de la pression hydraulique lors du passage du mode d'exploitation normal au mode de sauvegarde.

14. Dispositif de freinage (10) selon la revendication 12 ou 13, **caractérisé en ce qu'**au moins une soupape d'étranglement (38) est agencée dans la conduite hydraulique (32).

15. Dispositif de freinage (10) selon l'une quelconque des revendications 12 à 14, **caractérisé en ce qu'**au moins un diaphragme est agencé dans la conduite hydraulique (32).
